# EUROPEAN PATENT SPECIFICATION

(11) **EP 3 091 265 B1**
(45) Date of publication and mention of the grant of the patent: **18.09.2019**
(21) Application number: 15166268.1
(22) Date of filing: 04.05.2015
(51) Int. Cl.: F16L 27/111, F01N 13/18, F16L 51/02, F16L 27/10

(54) **FLEXIBLE CONDUIT ELEMENT**
FLEXIBLES LEITUNGSELEMENT
ÉLÉMENT DE CONDUITE FLEXIBLE

(43) Date of publication of application: 09.11.2016
(73) Proprietor: Sjm Co., Ltd., Kyungki Province 425-100 (KR)
(72) Inventor: Ashutosh, Narain, Yeonsu-gu, Incheon City (KR)
(74) Representative: Grünecker Patent- und Rechtsanwälte PartG mbB

(56) References cited:
- EP-A1- 1 431 538
- DE-A1-102007 038 509
- DE-A1-102008 017 598
- DE-A1-102011 087 540
- DE-U1-202011 005 629
- GB-A- 2 427 252
- US-A1- 2014 261 842

## Description

The present invention relates to a flexible conduit element having a flexible member for use in exhaust gas systems of combustion engine vehicles, a method for forming the flexible member around the flexible conduit element and an exhaust gas system of a combustion engine comprising a flexible conduit element.

It is well known that vehicle engines are coupled to the exhaust pipe employing a flexible conduit element functioning as a decoupler for exhausting the exhaust gas from the vehicle and to absorb and buffer the vibration displacement, impact load or heat deformation generated for example by the operation of the combustion engine and / or displacements of the exhaust gas system during driving.

The flexible conduit element should be mounted to absorb vibrations generated by the combustion engine, driving on the road and/or displacements between the combustion engine and the exhaust gas system. There is a possibility of excessive displacement between the combustion engine and the exhaust gas system in any direction, such as tension compression, bending or deflection of the respective parts and joints of and between the combustion engine and the exhaust gas system.

Various types of the flexible conduit element are know and one of them is described in GB 2 427 252 A which shows a flexible coupler apparatus in a compact, simple structure.

GB 2 427 252 A describes a flexible conduit element configured for use in an exhaust gas system of combustion vehicles. The flexible conduit element thereof comprises a bellows member and a flexible member which surrounds the whole bellows member. Further, the bellows member and the flexible member are surrounded at each end by a cap-like fixing element. Both of these components, the bellows member and the flexible member, are made of metal. The bellows member and the flexible member are respectively joined to each other by means of the fixing element which firmly connects the end portion of both by welding or pressing. Further, the traction limit and displacement properties of the flexible member are limited to the mesh-structure used. Thus, the conduit element has limitations and different dynamic characteristics of movement in combustion engines.

DE 10 2011 087 540 A1 discloses a flexible coupling element where one end of the flexible member is not fixed to the bellows member end portion. Rather, it is fixed to a floating structure.

An object of the invention is to provide a flexible conduit element which comprises a flexible member which cannot be affected by vibration of a power increase of an engine and which assures a proper positioning of the flexible member on the bellows member without affecting the durability and flexibility of the flexible conduit element and its dynamic stiffness.

The object of the invention is solved according to the invention by means of a flexible conduit element comprising the features of claim 1. Advantageous embodiments of the flexible conduit element can be derived from the subclaims 2 to 13.

Another object of the invention is to provide a method for forming a flexible member around a bellows member.

This object with regard to the method is solved according to the invention with a method comprising the features of claim 14.

An advantageously embodiment of the method can be derived from the subclaim 15.

A further object of the invention is to provide an exhaust gas system which is durable and cost effective to produce and which is not harmed or influenced by the increased frequencies of an engine when its power is increased.

The object with regard to the exhaust gas system is solved according to the invention by an exhaust gas system according to claim 16.

According to one embodiment of a flexible conduit element, the flexible conduit element configured for use in exhaust gas systems of combustion engine vehicles, comprises a bellows member being made of an elastic material, preferably metal, a first fixing element, which at least partially surrounds an end portion of the bellows member, and a second fixing element which is spaced to the first fixing element, a flexible member which at least partially surrounds the bellows member, said flexible member comprises a first end portion and a second end portion, wherein one of the first end portion and/or second end portion of the flexible member which is neighboured to one of the fixing elements is separated from the respective fixing elements. In this regard the term "neighboured" should be understand that there is no further element located in the space or gap between the bellows member and the fixing element with the exception of the end portion of the flexible member. That at least one end portion of the flexible member is separated to the respective fixing elements makes the end portion movable which has the following advantages. First, since the flexible member is not stationary fixed to the bellows member, the flexible member does not limit the overall flexibility and moveability of the flexible conduit member. Second, if the flexible element has been deformed such that the free end of the flexible member is disengaged from its position, the principal function is still in place without the need for repair.

Additionally, the movable free end portion advantageously allows a movement of the end portion around the middle or center axis of the flexible conduit element. The end portion is free to move, since the portion between the both end portions is radial biased towards the bellows member, in particular when the flexible member is knitted/woven or braided around the bellows member.

According to another embodiment of the flexible conduit element, the flexible conduit element comprises an outer ring element which at least partially surrounds at least one end portion of the bellows member, and which is located at the inlet and/or outlet of the bellows member, wherein at least one of the first end portion, a middle portion and/or second end portion of the flexible member, which middle portion is located between the first and second end portion, is biased against the bellows member. The outer ring element is a fixing element like a cup, for holding an end portion of the bellows member, the flexible member and/or an inner tube. The ring element can comprise an inner and an outer ring for defining a space for maintaining the respective end portions. The biasing of the flexible member against the bellows member can be performed by means of a spring surrounding the flexible member with a predetermined tension.

According to another embodiment of the flexible conduit element, the first and/or the second end portion of flexible member is positioned between the bellows member and the fixing element such that the end portion of the flexible member is spaced to both to the bellows member and the ring element, wherein the fixing element and the end portion of the bellows member define a receiving pocket into which the end portion of the flexible member is positioned. The receiving pocket has the advantage in providing a space for movably maintaining an end portion of the flexible member without the need to fix the end portion in an additional manufacturing step. Preferably, the end portion of the flexible member is freely movable within the receiving pocket.

According to a further embodiment of the flexible conduit element, the flexible member extends at least from one end portion of the bellows member to a middle portion of the bellow member, and/or to the opposite end portion of the bellows member, wherein the flexible member is partially biased against the bellows member by means of the fixing element and/or a resilient element, like a spring. Biasing or stationary attaching the flexible member at predetermined position to the bellows member and/or to other parts of the flexible conduit element allows influencing the dynamic stiffness of the flexible conduit element over a certain range of frequency of the vibrations of a combustion engine.

According to another embodiment of the flexible conduit element at least one end portion or middle portion of the flexible member is fixed against the bellows member by means of the cap and/or a resilient member, for example an annular spring, which provides radial force with which the flexible member is forced against the outer surface of the bellows member, and at least one end portion of the flexible member is fixed against the bellows member by means of a restriction element, like a tension wire such that both and or the other end portion is torsionally movable around a middle axis of the flexible conduit element.

According to a further embodiment of the flexible conduit element at least one end portion of the flexible member is secured with a tie knot seam, which partially covers the end portion of the flexile member and is secured to the end portion by knitting, sewing, riveting, clueing and/ or welding, and / or at least one end portion of the flexible member is fixed against the bellows member by means of a restriction element, like a tension wire. This provides the advantage to secure the flexible member to the flexible conduit element at predetermined position thereof. A restriction element can be a tension wire or tape which does not change its length under stress but hold a predetermined diameter or length without an elastic deformation.

According to another embodiment of the flexible conduit element the flexible member covers at least one end portion of the bellows member and extends to the middle portion of the bellows member, which middle portion is not covered by the flexible member, wherein the middle portion is covers by a second flexible member, which is attached to the flexible member which covers the end portion of the bellows member. This means that lesser material must be used for the production of the flexible member. Preferably, the flexible member is made of a fiber which is woven and or knitted. Additionally, the flexible member at each end portions can be made by different woven techniques, like braiding or knitting.

According to a further embodiment of the flexible conduit element the middle portion is covered by a second flexible member, which is attached to the flexible member which covers the end portion of the bellows member and which has a different stiffness than the first flexible member covering the end portions of the bellows member. The use of different flexible members with different stiffness or of one flexible member which has portions with different stiffness's gives the flexible conduit element at predetermined positions different stiffness's and rigidities with which the overall dynamic stiffness of the flexible conduit element can be influenced and set.

According to another embodiment of the flexible conduit element the flexible member is made of a fiber which is woven, braided, and/or knitted. As mentioned above, the combination of different braided or knitted layers for the flexible member provides the same with different flexible properties. For example a knitted layer has a much lesser stiffness than a braided layer.

According to a further embodiment of the flexible conduit element the restriction element is threaded into the end portion of the flexible member, in particular into the tie knot seam and / or the end portion of the flexible member, in particular into the loops formed by the woven fabric and knitted fabric, respectively.

According to another embodiment of the flexible conduit element the bellows member defines a guiding channel for guiding the exhaust gas of a combustion engine, or the guiding channel is defined by an inner tube or by an inner tube surrounded by a mesh.

According to another embodiment of the flexible conduit element the flexible member is a circular woven tube having a constant diameter and/or a variable diameter at its first end portion, second end portion, or its middle portion.

According to an embodiment of a method of forming a flexible member around a bellows member of a flexible conduit element according to any of the claims 1 to 13, the bellows member is positioned into a forming device, wherein the bellows member is covered with a texture, which texture is biased towards the surface of the bellows member, in that the texture is formed around the bellows member with a smaller diameter than the outer diameter of the bellows member. Texture in this regard means a knitted, braided and / or woven structure which is formed around the bellows member, with a smaller inner diameter as the outer diameter of the corrugations of the bellows member.

According to an embodiment of the method the bellows member is simultaneously moved with the forming speed of the texture of the flexible member.

According to the method the flexible member is formed by knitting, braiding and/or weaving around the bellows member.

The invention will be described by several embodiments of the flexible conduit element depicted in the following figures form which further features and advantageous of the flexible conduit element can be derived from.
- Fig.1: shows in a partial sectional view a first embodiment of the flexible conduit element, wherein an end portion of the flexible member is movable located between a fixing element and a bellows member of the flexible conduit element,
- Fig. 1A: shows an enlarged sectional view A of the circular sectional view A indicated in Fig. 1 of the fixing member and the bellows member and the end portion of the flexible member located therebetween,
- Fig. 2: is a partial sectional view of a second embodiment of a flexible conduit element, showing another end portion of the flexible member located in the neighbourhood of the fixing element and the bellows member,
- Fig. 2A: is an enlarged sectional view B of the elliptic sectional view B indicated in Fig. 2,
- Fig. 2B: is an enlarged sectional view C of the circular sectional view C indicated in Fig. 2A,
- Fig. 3: is a partial sectional view of a third embodiment of the flexible conduit element, wherein the flexible conduit element comprises at least two flexible members,
- Fig. 3A: is an enlarged sectional view D of a middle part of the third embodiment of the flexible conduit element of the elliptic sectional view D indicated in Fig. 3,
- Fig. 3B: is an enlarged sectional view E of the circular sectional view E indicated in Fig. 3A,
- Fig. 4: is a partial sectional view of a fourth embodiment of the flexible body conduit member, wherein the flexible member is comprised of at least two different portions having different stiffness properties,
- Fig. 4A: is an enlarged view F of the elliptical sectional view F indicated in Fig. 4,
- Fig. 5: is a partial sectional view of a fifth embodiment of a flexible conduit element showing a connection of the end portion of the flexible member to the bellows member of the flexible conduit element,
- Fig. 5A: is an enlarged sectional view G of the connection of the end portion of the flexible member of the elliptical sectional view G indicated in Fig. 5,
- Fig. 5B: is an enlarged view H of the circular sectional view H indicated in Fig. 5A,
- Fig. 6: is a partial sectional view of a sixed embodiment of a flexible conduit element showing another connection of an end portion of the flexible member with the bellows member,
- Fig. 6A: is an enlarged view J of the elliptical sectional view J indicated in Fig. 6,
- Fig. 6B: is an enlarged sectional view K of the circular sectional view K indicated in Fig. 6A,
- Figs. 7A to 7C: are schematic perspective views of the flexible member, showing different embodiments of the shape of the flexible member,
- Figs. 8A to 8D: show schematic views of different flexible conduit elements, wherein the arrows indicate the fixation points of the flexible member to the bellows member,
- Fig. 8E: is a schematic view of the flexible conduit element without the flexible member,
- Fig. 9: shows a functional graph showing relationships between a dynamic stiffness over a frequency range of a combustion engine of a flexible conduit element with and without the flexible member, and
- Fig. 10: shows in a schematic block diagram a method for forming the flexible member around the bellows members by knitting / braiding or weaving.

Further features and advantages of the invention will be apparent from the detailed description of the various embodiments described herein below.

A flexible conduit element 1 is preferably used in the automotive industry, in particular in a vehicle with a combustion engine.

Advantageously, the flexible conduit element 1 is placed between the joint of a combustion engine and the associated exhaust gas system, in particular between the exhaust gas outlet of the combustion engine and the exhaust gas inlet of the exhaust gas system.

Preferably, the flexible conduit 1 element serves as a decoupler in the exhaust system, to compensate heat and vibration as well as impact loads which are caused by operation of the combustion engine and combustion engine roll when starting the combustion engine or during acceleration and braking or gear shifting. Also, road condition may generate vibrations on pipes of the exhaust gas system. With the flexible conduit element 1 the above mentioned loads and stresses can be easily compensated and the joint between the combustion engine stays intact in all conditions and stress situation due to the flexible conduit element 1 according to the invention.

An increased output of power from the combustion engine might lead to increased vibrations and or displacements, impact loads or heat deformations which can damage the joint between the flexible member and the bellows firmly fixed in the fixing element. Additionally, the used in prior art methods of welding and/or pressing can damage the flexible member and/or the bellows member which might disturb the overall properties of the flexible conduit element. Further, the firmly connection between the bellows member and the flexible member of prior art flexible conduit elements makes it difficult to maintain, repair and/or replace the prior art flexible conduit element.

Another drawback of the stationary fixation of the flexible member with the cap-like fixation elements at each end portion results in a less flexible conduit element since the end-portion fixed flexible member does limit the overall displacement and deformation of the flexible conduit element.

Further, the flexible member of the prior art have a fixed mesh structure which gives the flexible member a singular stiffness over its whole body not appropriate over an operation frequency range of an combustion engine.

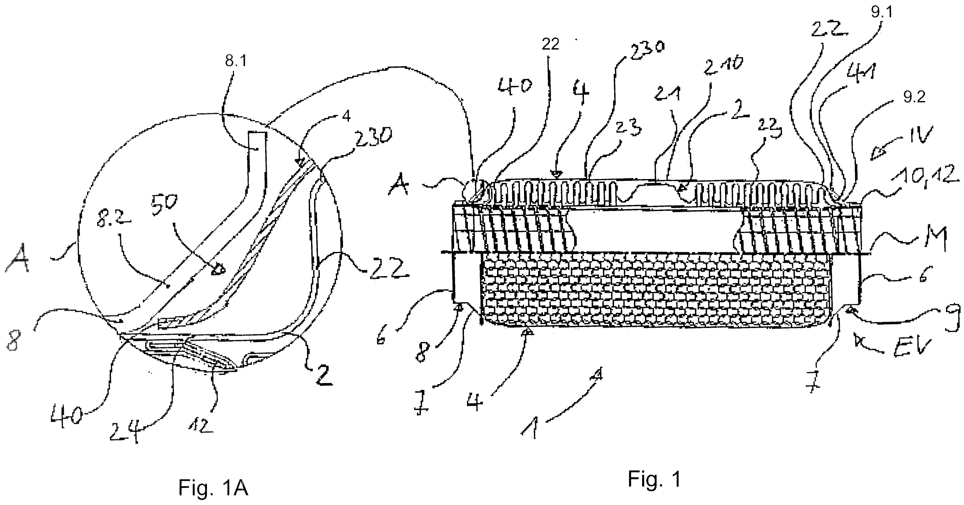

Fig. 1 shows a first embodiment of a flexible conduit element 1 according to the invention which is illustrated therein in a partial sectional view. The partial sectional view is divided by the center line M into an upper sectional view which shows an inner view IV of the flexible conduit element 1, and a lower outer view which shows an exterior view EV of the flexible conduit element.

The flexible conduit element 1 comprises in its simplest embodiment (not shown) a bellows member 2, preferably being made of metal, having a helically or annularly corrugated shape, and an outer flexible member 4 which surrounds the bellows member 2 at least partially.

Preferably, the flexible member 4 is comprised of a net-like structure and has a tubular shape such that it can be mounted onto the bellows member 2 like a hose. Advantageously, the net structure comprises a knitted or woven fabric. The flexible member 4 is made of a wire mesh which comprises knitted loops such that the flexible member has a net-like structure, as can be seen in the exterior view EV in Fig. 1.

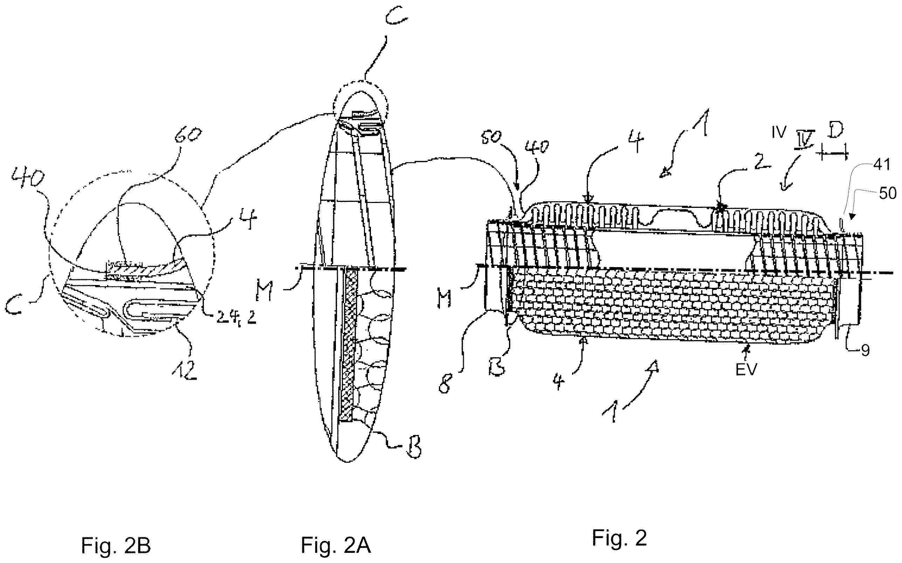

Additionally, the flexible member 4 is preferably made of a metal fiber which is integrally woven to a hose having a mesh structure which can clearly cover the bellows member 2. In other words, the outer flexible member 4 is comprised of a mesh structure, in particular a mesh structure of knitted wire mesh. The mesh structure is visible in Figs. 1 and 2 in the lower half which depicts an exterior view EV of the flexible conduit element 1. The upper half in Figs. 1 and 2 shows a partially sectional view which shows the elements which are below the flexible member 4, which at least partly surrounds an inner tube 10 defined by the bellows member 2. The section of the upper and lower view is divided by the center line M.

In the embodiment shown in Fig. 1, the flexible conduit element 1 comprises further elements namely: an inner tube 10 which defines a conduit for an exhaust gas, for example of a combustion engine. The inner tube 10 shall protect the inner side of the bellows member 2 and can assure a liquid and / or air proof tight conduit of the exhaust gas. Depending on the kind of combustion engine different types of inner tubes 10 can be used.

In another embodiment not shown, the inner tube 10 is formed by a knitted mesh (not shown). The inner tube 10 which is comprised of a knitted wire mesh hose is designed such not to touch corrugations of the bellows member 2 when in an unbent condition. Due to the use of a knitted wire mesh as inner tube 10, an exhaust gas guided through the flexible conduit element 1 will mainly go through the inner tube 10, as the knitted wire mesh forms a more or less solid surface with less recesses between the bunches of wires forming the wire mesh. Advantageously, the metal braid of the inner tube 10 has a completely different design than the design of the outer flexible member 4. The flexible conduit element 1 having an inner tube 10 which is made of a knitted mesh is preferably used in diesel combustion vehicles.

The inner tube 10 can be of agrafe-type tubing, like an agrafe-type hose 12, as illustrated in the interior view IV, which preferably surrounds the inside of the bellows member 2. The agrafe-type hose 12 can comprises spirally-shaped elements connected by a hook-like design. The embodiment for using the agrafe-type hose 12 is preferably used for petrol engines.

Thus, the inner tube 10 can be a knitted mesh or an agrafe-type hose 12.

Additionally, there are fixing elements 8 and 9 which are provided as a mounting portion to the inlet and outlet openings of the combustion engine, and the inlet opening of a pipe of an exhaust gas system, respectively. Further, these fixing elements 8 and 9 can secure end portions 40, 41 of the flexible member but do not firmly engage them at each end portion 40, 41 of the flexible member 4.

According to this invention, at least one end portion 40, 41 of the flexible member 4 is in not direct engagement with the fixing elements 8, 9 but can be loosely inserted in a receiving pocket 50 formed by the inner surface of the fixing element 8 and the outer surface of the bellows member 4, as can be clearly seen in the enlarged sectional view A of Fig. 1A. The inner surface of the fixing element 8 is the surface of the fixing element 8 which is opposite to the outer surface of the bellows member 2 when both components are mounted to form the flexible conduit element 1, shown in Fig. 1

The end portion 40 of the flexible member 4 is not in direct contact with both angled end portions 8.1, 8.2 of the fixing element 8 and the outer surface of the bellows member 2, namely an annular corrugation 23 and a flange portion 24 at an end portion of said bellows member 2. The flange portion 24 and an annular corrugation 23 of the bellows member 2 together with the angled end portions 8.1, 8.2 of the fixing element 8 define the receiving pocket 50 for receiving the end portion 40 of the flexible member 4 in a moveable manner. However, at least one or both of the end portions 40, 41 of the flexible member 4 can be also fixed in place in the receiving pocket 50.

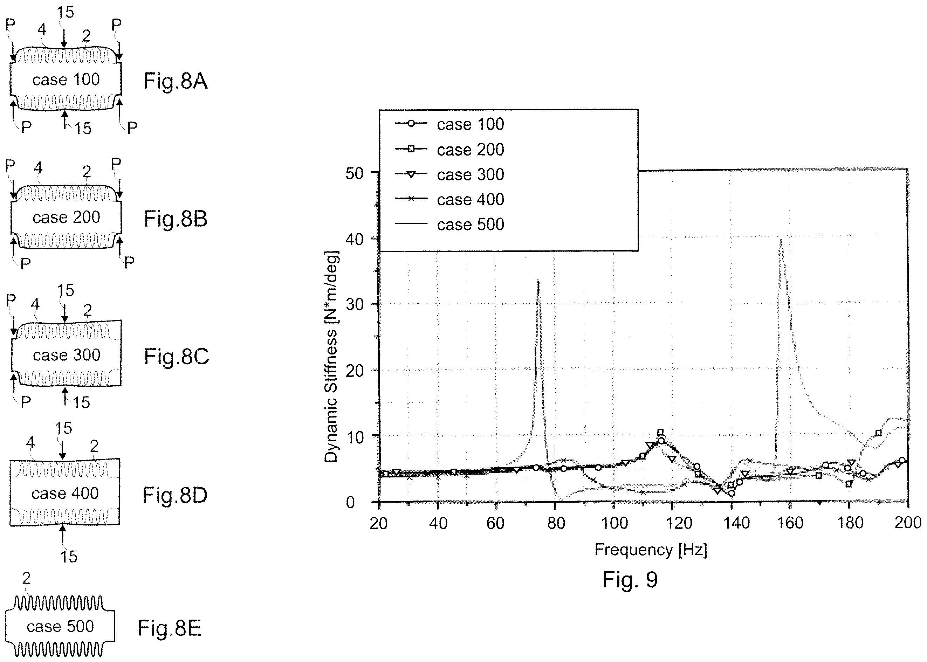

According to the invention at least one of the end portions 40, 41 of the flexible member 4 which is in the neighbourhood of a fixing element 8, 9 is not stationarily fixed within the receiving pocket 50 but free to move such that the corresponding end portion 40, 41 and its periphery is not in direct contact with the respective surfaces of angled end portions 8.1, 8.2; 9.1, 9.2 of respective the fixing element 8, 9, the surfaces of the flange portion 24, and annular corrugations 22, 23, 21 of the bellows member 2, respectively, but free to move within the space defined by these surfaces. This means that the end portion 40 of the flexible member 4 can be moved within the receiving pocket 50 and even disengage out of the receiving pocket 50 without any damage to the flexible conduit element 1 which improves the dynamic stiffness of the whole flexible conduit element 1, which can be for example derived in, in Figs. 8C and 8D in connection with Fig. 9. The fact that at least one the end portion of can disengage from the receiving pocket 50, when a deformation or displacement act on the flexible conduit element 2 means that the flexible member 4 stays unharmed and can be easily relocated in the receiving pocket 50 without the need to exchange the whole flexible conduit element 2. This means that the end portions 40, 41 are detachably coupled to at least one end bellows member 2 and are allowed to perform torsional movement around the center axis M when necessary, for example a torsional displacement at the pipe of the exhaust gas system. The end portions 40, 41 of the flexible member 4 need not to be fixed, when the flexible member 4 is radial biased towards the bellows member 2 of the flexible conduit element 2.

Preferably, such a radial biasing of the flexible member 4 towards the bellows members 2 is provided in every embodiment for the flexible conduit element 1 according to the invention and described herein.

The bellows member 2 has at predetermined positions different annular corrugations 22, 23, 21 located in the embodiments shown in Fig. 1 to 6 at the respective end portions and middle portions of the bellows member 2. The annular corrugations 22 neighboured to the end portions 40, 41 of the flexible member 4 have a smaller radial diameter than the annular corrugations 23, 21 in the middle portion of the bellows member 2. The corrugation 22 adjacent to the flange portion 24 has a tip portion 230 with a smaller radial diameter with regard to the middle axial M than the corrugations 21, 23 between the end portions of the bellows member 2. Additionally, the corrugation 21 at the center portion of the bellows member 2 has a broader tip portion 210 than the adjacent annular corrugations 23 having with regard to the corrugation 21 a smaller tip portion 230.

Thus, the bellows member 2 comprises corrugations of different radial extension and of different tip portions 210, 230. From the outermost corrugations 22 towards the inside, the radial extension of the corrugations increases to a sequence of corrugations 23 of equal height. At about the middle of the flexible conduit element 1, the radial extension of the corrugations is not reduced, but the middle corrugation 21 forms a bigger tip portion 210. Of course, there might also be a greater number of undulations of reduced radial extension as well as a smaller number of such corrugations.

The fixing elements 8 and 9 respectively comprise in inner ring 6 and an outer ring 7 which at least partially surround the end or flange portions 24 of the bellows member 2 and of the inner tube 10, if provided. The inner and outer rings 6, 7 are respectively fixedly connected to the opposite end portions 40, 41 of the inner tube 10 or the agrafe-type hose 12.

Fig. 2 shows another embodiment of a flexible conduit element 1, wherein the end portions 40 of the flexible member 4, in particular the wire loops, which form the flexible member 4, are secured by means of a securing element, namely a seam band 60.

Additionally, the fixing elements 8 and 9 are spaced with a greater gap D to the outer surface of the flexible member 4 and the inner surface of the than in the embodiment of Fig. 1.

The end portion 40 and 41 of the flexible member 4, respectively, as shown in the embodiment in Fig. 2, is surrounded by a seam band 60 for securing the mesh structure of the flexible member 4.

The end portion 40, 41 of the flexible member is secured via the seam band 60 which is preferably attached to at least one side of the end portion 40, wherein in Fig. 2B the end portion 40 is shown with a seam band 60 on both opposite sides of the end portion 40. The seam band 60 protects the end portions 40, 41 such that the material used for forming the flexible member stays in compact form and is not dissolved in its components. Preferable, the seam band 60 is a ring shaped tubing which is secured to the end portions of the flexible member 4. Additionally, the seam band predetermines the inner diameter formed by the end portions 40, 41 such that the inner diameter set by the seam band 60 is smaller than the outer diameter of the bellows member 2. However, the seam band 60 needs not to be fixed, when the flexible member 4 is radial biased towards the bellows member by knitting, braiding, weaving.

The seam band 60 can be also provided with curing means which give the end portion a predetermined shape, similar to a hook, such that the hook-like end portion can be detachably engaged in the respective receiving pockets 50, but maintains is movability without limiting the overall deformability of the flexible conduit element 1. In Fig. 2B the seam portion 60 is shown in close contact with the bellows member 2 and its flange portion 24. Preferably, there is a gap between the flange portion 24 of the bellows member 2 and the seam band 60 attached to the end portion of the flexible member 4 similar as shown in Fig. 1A with regard to the end portion 40 in the receiving pocket 50.

The seam band 60 is preferably made of metal and radially limits the end portions 40, 41 of the flexible member 4 such that the radial diameter at the respective end portions 40, 41 is smaller than at the middle portion 42 of the flexible member 4.

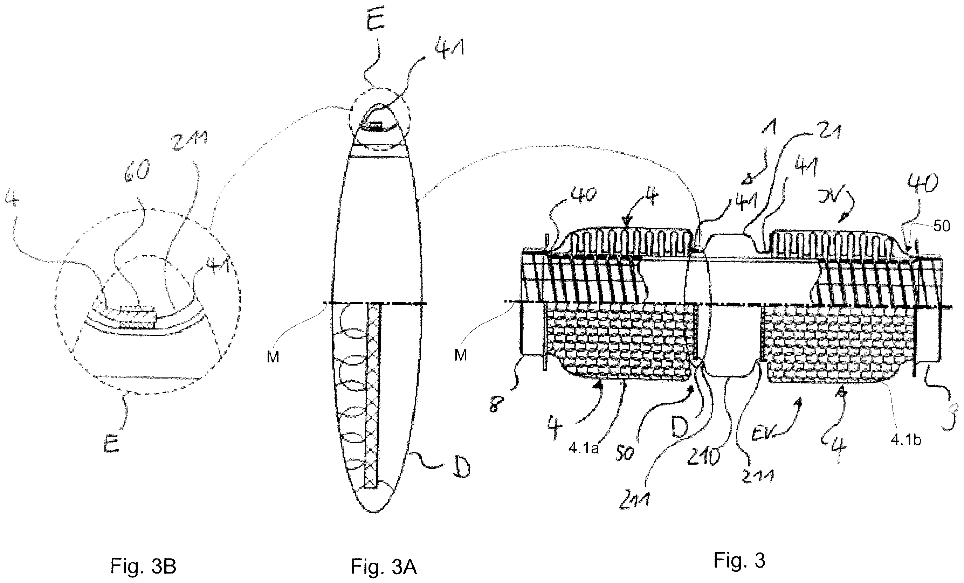

Fig. 3 shows a partially sectional view of a third embodiment of a flexible conduit element 1, wherein the upper half of the sectional view shows the inner structure of the conduit element 1 and the lower view shows the exterior view EV of the flexible conduit element 1.

In contrast to the embodiments 1 and 2 shown in Figs. 1 and 2, in the third embodiment of the flexible conduit element shown in Fig. 3, the bellows member 2 is not completely surrounded by the flexible member 4 but a middle portion 21 of the bellows member 2 is left free and exposed.

The middle section 21 of the bellows member 2 has an exposed middle portion 21 with a broadened tip portion 210 and a valley portion 211 at both opposite sides of the tip portion 211. The valley portion 211 forms a receiving pocket 50 for receiving an end portion 41 of the flexible member 4.

The valley portion 211 is only partially surrounded by the end portion 41 of the flexible member 4 which end portion 41 is movably fixed by means of a seam band 60 restricting the diameter thereof. Preferably, the end portion 41 is detachably engaged to the outer surface of the corrugation in the neighbourhood of the valley portion 211 in that the end portion 41 is brought in a positive fit therewith but is still at least torsionally movable around the middle axis M of the flexible conduit member.

Fig. 3A and 3B are enlarged views of the respective sectional views D and E of the sections of the flexible conduit element 1 indicated in Fig. 3 with the elliptical sectional view D, and indicated in Fig. 3A with the circular sectional view E.

The end portion 41 of the flexible member 4.1a and 4.1b, respectively, can be fixed in the valley portion 211 to the outer surface of the bellows member 2 for example by gluing welding or other methods to ensure that the respective flexible members 4.1a and 4.1b do not change their positions. However, the respective flexible member 4 is not fixed with its end portion at the respective fixing elements 8 and 9 and is free to move as, for example, shown in Fig. 1, such that at least one end portion of the flexible member is free to move.

In another embodiment not shown, both end portions 40 and 41 are not fixedly attached via the seam band 60 to the respective receiving pockets 50 in the neighbourhood of the tip portion 21 but also free to move. The seam band 60 gives the end portion of the flexible member a hook-like shape, such that the end portion 41 is in movable and detachable engagement with the valley portion 211 of the bellows member 2. Preferably, the seam band 60 is a metal braid attached at the respective end portions, for example by welding, riveting and/or sewing such that the diameter at the respective end portions 40, 41 is narrowed with regard to outer diameter of the bellows member 2 such that the flexible member 4 is movable to a certain degree over and / or torsional around the bellows member 2 but held in place, in particular contactless.

As can be seen in the enlarged section views E and D the end portion 41 at the valley position 211 is provided with a seam band 60 for securing the respective end sections such that the overall shape and configuration of the end section is maintained. As mentioned above, the flexible member is a knitted or woven mesh having loops formed by at least one fiber made of metal. A function of the seam band 60 is therefore to secure the loops and to prevent a loosening of the fiber.

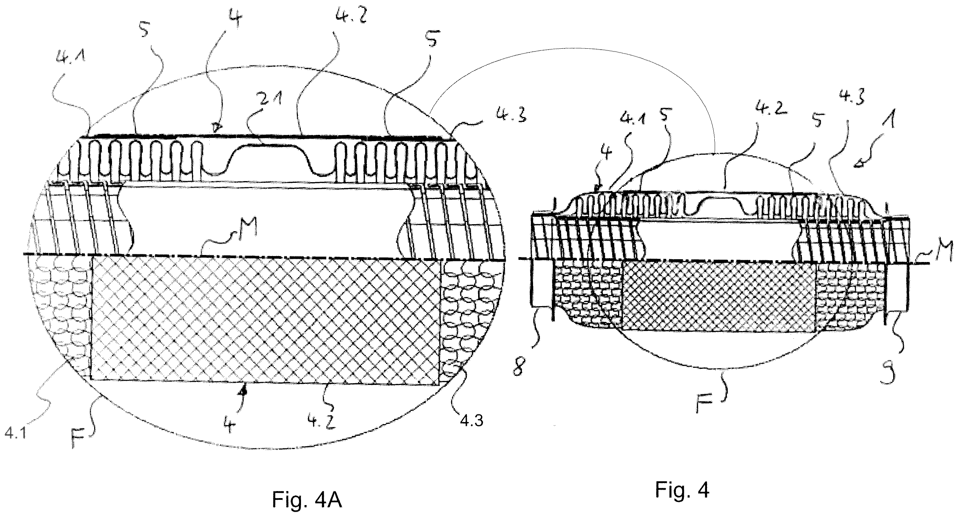

Fig. 4 shows in a partial sectional view a fourth embodiment of the flexible conduit element 1 with a flexible member 4 comprising three sections 4.1, 4.2, and 4.3. Fig. 4A shows an enlarged view of the elliptical section of Fig. 4. Both views of Fig. 4 and Fig. 4A show in their upper section a sectional view of the inner structure of the flexible conduit element 1, and in the lower view an exterior view EV of the flexible conduit element.

Additionally, the middle portion of the bellows member 2 is surrounded by a flexible member 4.2 which is made of different material, like different fabrics, knitted fabrics for example, in particular by a different manufacturing technique, namely braiding to have a different stiffness in comparison to the adjacent section 4.1 and 4.3.

As can be seen in the enlarged sectional view Fig. 4A, the flexible member 4 comprises two different layers 4.1, 4.2, wherein these different layers are preferably made of different materials with different properties, in particular with regard to the dynamic stiffness. This can be achieved, for example, by means of different woven techniques, like knitting and braiding, wherein, for example, sections 4.1 and 4.3 are knitted and section 4.2 is braided.

From the lower view on Fig. 4 and in particular in the enlarged sectional view F of Fig. 4A the different structures of the respective sections 4.1, 4.2 and 4.3 can be seen. The sections 4.1 and 4.3 comprise a knitted structure having equal stiffness properties, wherein the section 4.2 in the middle of the flexible member 4 is comprised of a braiding structure having a greater stiffness than the knitted ones. Due to the different structures the flexible member 4 has different properties in stiffness, since a braiding layer is stiffer than a knitted layer.

With other words the flexible member 4 shown in Fig. 4 comprises three different portions, namely portions 4.1, 4.3 which are made of a normal woven or knitted metal fiber, and a middle portion 4.2, which is made of braided material. Preferably, the different parts are knitted or glued together. This shown two-layer concept allows different portions with different dynamic stiffness at predetermined positions and also different torsional and axial movement properties.

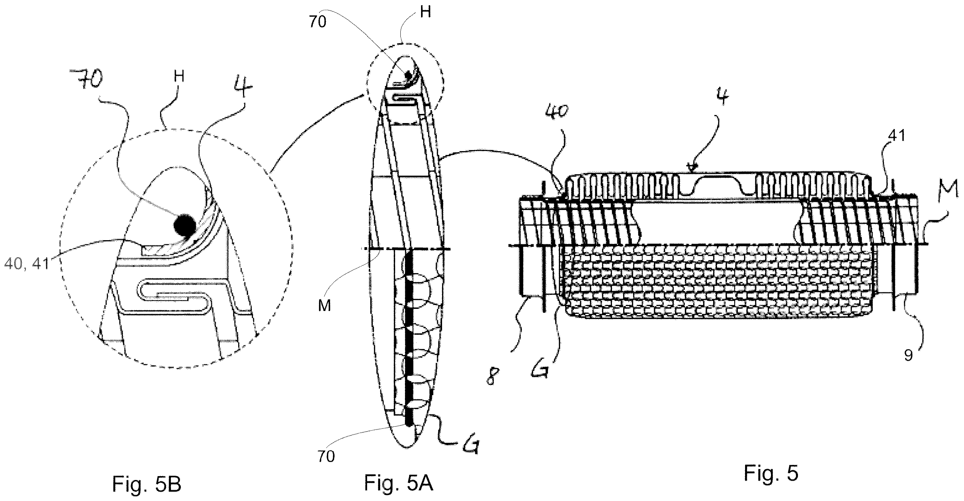

Fig. 5 shows in a partial longitudinal sectional view a fifth embodiment of a flexible conduit element 1, wherein the upper half of the view of Fig. 5 shows an inner structure the flexible conduit element 1 and the lower part shows the exterior view EV of the flexible conduit element 1.

The fifth embodiment of the flexible conduit element 1 shows another approach as how to attach the end portions 40, 41 of the flexible member 4 to the flexible conduit element 1, namely by a restriction element 70, in particular a restriction/tension wire 70, for limiting the radial extension of the respective end portions 40, 41. By restricting the radial extension of the respective end portions 40, 41 of the flexible member 4 to a predetermined inner diameter which inner diameter is smaller the outer diameter of the bellows member 2, the flexible member 4 is movable positioned around the bellows member 2, without limiting its moveability.

Preferably, as shown in the enlarged sectional view H of Fig. 5B, the tension wire 70 does not fully bias the end portion 40 of the flexible member against the surface of the bellows member 2 but leaves a space therebetween, so that there is no direct contact between the bellows member 2 and the flexible member 4. With this space or gap the flexible member can better react to deformations acting on the flexible conduit element 1 without limiting the possibilities of deforming the flexible conduit element 1 and/or without destroying any joints of the flexible member 4 with the flexible conduit element 1. In particular, the end portion 40 of the flexible member 4 can also be torsionally wound around the middle axis M of the flexible conduit element 1 since the end portions 40, 41 are located movable around the end portions of the bellows member 2.

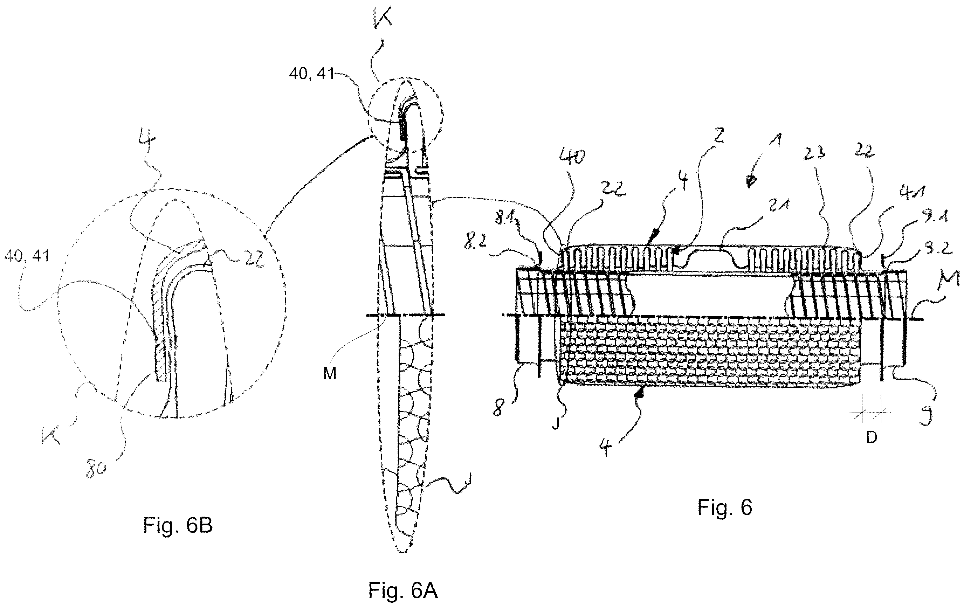

Fig. 6 shows a sixth embodiment of a flexible conduit element 1, which shows another embodiment as how to attach at least one end portion 40, 41 of the flexible member 4 to the outer surface of the bellows member 2. Fig. 6 shows, as with the other embodiments shown in Figs. 1 to 5, a partially longitudinally sectional view, wherein the upper half of the sectional view shows in a sectional view the inner structure of the flexible conduit element, and the lower view shows the exterior view EV of the flexible conduit element 1.

As can be seen, in particular in the enlarged sectional views J and K of the elliptical sectional view of Fig. 6, the end portion 40 of the flexible member 4 is at one side spaced with a distance D to the angled portions 8.1, 8.2 and 9.1, 9.2 of the fixing elements 8 and 9, respectively, and additionally at the opposite side spaced to the corrugation 22 to the bellows member 2, and thus not in direct contact with the fixing element but in the neighbourhood of same.

The end portion 40 of the flexible member 4 of the sixth embodiment includes a predetermined maintained shape, such that at least one end portion 40, 41 function as a positive coupling for anchoring on the surface of the tip portion of the corrugation 22 of the bellows member 2. In the in Fig. 6 illustrated embodiment both end portions 40, 41 are formed as an end portion 80 for positive coupling.

The predetermined maintaining shape of the end portion 40, 41 can be for example achieved by shaping the same with metal, glue or plastic in the positive coupling shape, such that the end portion 40 of the flexible member has a hook-like shape, which allows the end portion to partially surround the annular corrugation 22 with a predetermined space. As can be seen from the enlarged sectional view K of the end portion, the surface of the positive coupling is distanced to the surface of the annular corrugation 22 of the bellows member. The length of the flexible member 4 is set in such a manner that there is no press-fit but loose-fit with the end portions 40 of the flexible member 4 at the respective annular corrugation portion 22 of the bellows member 2 such that, for example, a torsional movement of the end portion is possible.

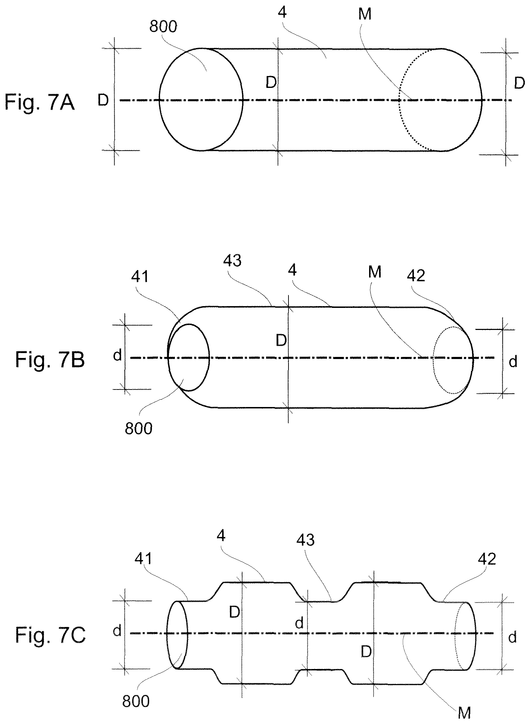

Figs. 7A to 7C show different embodiments of the shape of the hose of the flexible member 4.

Fig. 7A shows a flexible member 4 with a generally constant tubular shape, wherein the inner and outer diameter D at the first end portions 41, the second end portion 42 and the middle portion 43 is constant over the length axis M of the flexible member 4.

Fig. 7B shows another embodiment of another possible shape of a hose of the flexible member 2, wherein the diameter d at the orifice 800 of the first end portion 41 and the second end portion 42 is smaller than the diameter D of the middle portion 42.

Fig. 7B shows a further embodiment of the shape of the hose of the flexible member 4, wherein the respective outer diameters d at the respective end portions 41, 42 is smaller than at predetermined middle portions, wherein the portion 43 which should be located over the corrugated middle part 21 of the bellows member 2 has the same diameter d as the end portions, such that the outer shape of the surface of the hose of the flexible member has a wave-like shape.

In the following the influence of the fixation or biasing of the flexible member 4, for example by a spring, against the bellows member 2 or the fixing means 8, 9, of the dynamic stiffness of the flexible conduit element 1 is explained in the following below.

Figs. 8A to 8D show in a schematic view a flexible control element 1 with flexible member 4, wherein the flexible member 4 is biased against the bellows member 2 at the positions indicated with the arrows with the reference sign 15, for example by a spring, surrounding the flexible member 4, and is stationary fixed indicated with the arrows P. The biasing of the flexible member 4 against the bellows member 2 and the location in the receiving pockets 50 influence the dynamic stiffness of the flexible conduit element 1, as can be derived from the Fig. 9.

As can be seen, for example, in Figs. 8A and 8D in connection with Fig. 9, the dynamic stiffness of an flexible conduit element 100 to 400 is improved in comparison to a flexible conduit element 500 which has no flexible member 4 surrounding the bellows member thereof, as shown in Fig. 8E.

Fig. 8A shows in a schematic view a flexible conduit element 1, 100, wherein the middle portion of the flexible member 4 is biased against the bellow member 2 schematically indicated with the arrows 15. Further, the end portions 40, 41 of the flexible member 4 are stationary fixed for example by fixing elements 8, 9, as the inner and outer rings 6, 7, which clamp the end portions of the flexible member 4 in a fixed position.

This means for example that the flexible conduit element 1, 300 shown in Fig. 8C is provided with a flexible member 4 which one end portion is stationary fixed, see arrows P, wherein the other end is free to move, and the middle portion is hold in place by a resilient element 15, biasing the flexible member against the bellows member 2.

The flexible conduit element 100 shown in Figure 8D has a flexible member 4 which is not affixed at the end portions 40, 41 but only hold in place by means of a resilient element 15. This means the end portions of the flexible conduit element 100 are free to move.

The respective lines show a change of the phase at the respective frequencies of the respective flexible conduit elements shown in Figs. 8A to 8E.

Figs. 8A to 8E schematically illustrate flexible conduit elements 1. The flexible conduit elements shown in Fig. 8A to 8D are surrounded by a flexible member 4. The flexible member 4 shown in Fig 8A to 8D is radial biased against the bellows member 2 at the positions, indicated with the arrow P.

The second functional graph shows the vertical axis the dynamic stiffness of the respective flexible conduit elements shown in Figs. 8A to 8E, wherein the horizontal axis shows the frequency which acts on the respectable flexible conduit elements.

As can be derived from Fig. 9 and in combination with Figs. 8A to 8E, the bellows member 2 of the flexible conduit element provided with the tubular braided or knitted flexible member have over a frequency range between 20 and 200 Hz of a combustion engine, a relative small dynamic stiffness change, wherein the bellows member 2 of Fig. 8E (case 500) shows peaks in the dynamic stiffness at about 75 Hz and about 158 Hz which might lead to noise in the flexible conduit element 1 which might disturb a passenger of a vehicle. With the flexible member 4 according to the invention, such peaks can be omitted.

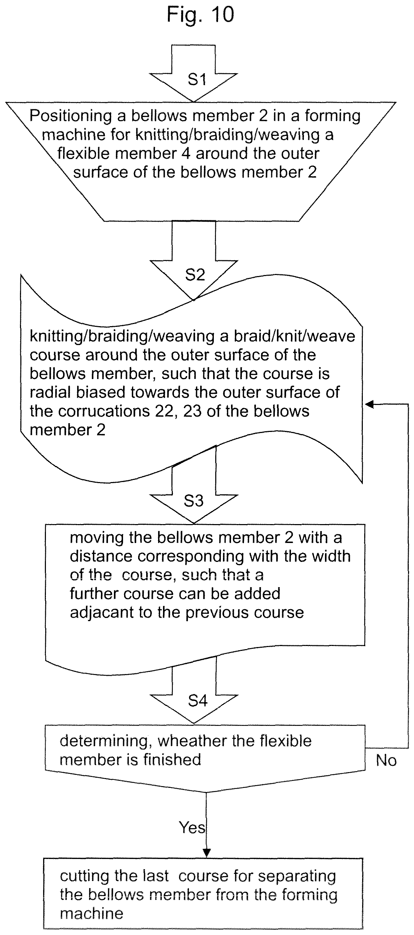

Fig. 10 illustrates in a schematic block diagram of manufacturing steps for forming the flexible member 4 onto the surroundings of the bellows member 2 of the flexible conduit element 1 by a forming machine for knitting/braiding/weaving.

First, the bellows member 2 is positioned with one end in a forming machine for knitting/braiding/weaving, as indicated with step S1.

When the bellows member 2 is positioned within the entrance of the forming machine, the end portion which is closest to a knitting/braiding/weaving head is knitted/braided/woven in a first course around the outer diameter of the bellows member, as indicated in step S2. Preferably, the shape of the knitted/braided/woven course is generally tubular and has a smaller inner diameter than the outer diameter of the bellows member 2. Thus, the flexible member formed by a plurality of courses is radial biased against the outer surface of the bellows member, since the courses are formed around the bellows member at predetermined positions with a smaller inner diameter than the outer surface of the bellows member, in particular the outer diameter of the corrugations. The course of the flexible member 4 can be adapted to the outer shape of the bellows member, such that the flexible member is tailored around the bellows member. Preferably, the outer diameter of 22, 23, 21 of the bellows member 2 is considered, such that the inner diameter of the flexible member 4 is adapted to and formed smaller than the outer diameter of the 22, 23, 21 of the bellows member 2. Thus, the flexible member 4 can be tailored around the different shapes and embodiments of the corrugations of the bellows members, shown in Figs. 1 to 6.

In step S3, the bellows member 2 is further introduced into the braiding machine, wherein the velocity of the forward movement of the bellows member corresponds with the knit/braid course distance such that the bellows member can completely or at least partially surrounded by the knitted/braided/woven flexible member 4.

In step S4, it is determined whether the whole bellows member 2 or a predetermined portion of bellows member 2 has been surrounded by the knitted/braided mesh of the flexible member 4, for example by sensors or by counting the length movement of the bellows member 2 within the forming machine or the formed courses around the bellows member 2. A programmable controller (not shown) decides whether the forming of the flexible member 4 is finished. When the logical answer to this determination is YES, the knitted/braided mesh is cut by a cutting device to separate the flexible member 4 from the forming machine.

When cutting the braided/knitted/woven flexible member 4 there can be loose fiber. In a further step, the loose end portion can be provided with fixation means as a precautionary measure against a loosening of fibers forming the braided/knitted/woven mesh of the flexible member.

Since the braided mesh forming the flexible member is braided/knitted/woven with a smaller diameter around the bellows member 2, it is radially biased against same without the need of a further step for fixing the flexible member onto the bellows member. Since the flexible member 4 is biased by the braided/knitted/woven process towards the bellows member 4 noises due to a movement of the flexible member against the corrugations of the bellows member can be prevented. Thus, the flexible member 4 can be defined as a texture, which texture is biased towards the surface of the bellows member, in that the texture is formed around the bellows member with a smaller diameter than the outer diameter of the bellows member.

If the logical answer would be NO, the forming of the flexible member is continued by adding a further braid/knit/woven course and the steps S3 and S4 are repeated until the predetermined length of the flexible member 4 is achieved.

The material, in particular the fiber for forming the flexible member 4 can be a metal wire, in particular stainless steel.

## Claims

1. Flexible conduit element (1) configured for use in exhaust gas systems of combustion engine vehicles, comprising:
a bellows member (2) being made of an elastic material, preferably metal,
a first fixing element (8), which at least partially surrounds an end portion (24) of the bellows member (2),
a second fixing element which is spaced to the first fixing element (8), and
a flexible member (4), which at least partially surrounds the bellows member (2), said flexible member (4) comprising a first end portion (40) and a second end portion (41),wherein the first end portion (40) of the flexible member is neighboured to the first the fixing element (8) and is separated from the first fixing element (8),
**characterized in that**
the first end portion (40) of flexible member (4) is loosely positioned between the bellows member (2) and the first fixing element (8) such that the first end portion (40) of the flexible member (4) is spaced to both to the bellows member (2) and the first fixing element (8), wherein the first fixing element (8) surrounds the first end portion (40) of flexible member (4) and, with the end portion (24) of the bellows member (2), defines a receiving pocket (50) into which the end portion (40) of the flexible member (4) is positioned.

2. Flexible conduit element (1) according to claim 1, comprising:
an outer ring element (7) which at least partially surrounds at least one end portion (24) of the bellows member (2) and which is located at the inlet or outlet of the bellows member (2), wherein at least one of a middle portion (42) and or second end portion (41) of the flexible member (4), which middle portion (42) is located between the first and second end portion (40, 41), is biased against the bellows member (2).

3. Flexible conduit element (1) according to claims 1 to 2, **characterized in that** the flexible member (4) extends at least from one end portion (24) of the bellows member (2) to a middle portion (21) of the bellow member (21), or to the opposite end portion (24) of the bellows member (2), wherein the flexible member (4) is partially biased against the bellows member (2) by means of the second fixing element (9) or a resilient element (15), like a spring.

4. Flexible conduit element (1) according to any of the preceding claims 1 to 3, **characterized in that** at least one of the second end portion (40, 41) or middle portion (42) of the flexible member (4) is fixed against the bellows member (2) by means of the second fixing element (9) or a resilient member (15), for example an annular spring, and at least one end portion (40, 41) of the flexible member (4) is fixed against the bellows member (2) by means of a restriction element (70), like a tension wire, such that both or the at least end portion (41, 40) is torsionally movable around a middle axis (M) of the flexible conduit element (1).

5. Flexible conduit element (1) according to any of the preceding claims 1 to 4, **characterized in that** at least one of the second end portion (40, 41) of the flexible member (4) is secured with a tie knot seam (60), which partially covers the end portion of the flexible member and is secured to the end portion by knitting, sewing, riveting, clueing and/or welding, and at least one end portion (49, 41) of the flexible member (4) is positioned as a single layer onto the surface of the outer corrugated surface of the bellows member (2).

6. Flexible conduit element (1) according to any of the preceding claims 1 to 5, **characterized in that** the flexible member (4) covers at least one end portion (24) of the bellows member (2) and extends to the middle portion (21) of the bellows member (2), which middle portion (21) is not covered by the flexible member (4).

7. Flexible conduit element (1) according to claim 6, **characterized in that** the middle portion (21) of the bellows member (2) is covered by a second flexible member (4), which is attached to the flexible member (4) which covers the end portion (24) of the bellows member (2) and which has a different stiffness than the first flexible member (4) covering the end portions (24) of the bellows member (2).

8. Flexible conduit element (1) according to any of the preceding claims 1 to 7, **characterized in that** the flexible member (4) is made of a fiber which is woven, braided, and/or knitted.

9. Flexible conduit element (1) according to claim 8, **characterized in that** the flexible member (4) comprises at least partially a braided fabric, a knitted fabric or a non-woven fabric, and is shaped into a tubular outer net for surrounding the outer corrugated tube of the bellows member (2).

10. Flexible conduit element (1) according any of the preceding claims 4 to 9, **characterized in that** the restriction element (70) is threaded into the end portion (40, 41) of the flexible member (4), in particular into the tie knot seam (60), in particular into the loops formed by the woven fabric and knitted fabric, respectively.

11. Flexible conduit element (1) according to any of the preceding claims 1 to 10, **characterized in that** the bellows member (2) defines a guiding channel for guiding the exhaust gas of a combustion engine, or the guiding channel is defined by an inner tube (10) or by an inner tube (10) surrounded by a mesh.

12. Flexible conduit element (1) according to any of the preceding claims 1 to 11, **characterized in that** the flexible member (4) is a circular woven tube having a constant diameter or a variable diameter at its first end portion (40), second end portion (41), or its middle portion (42).

13. Flexible conduit element (1) according to any of the preceding claims 1 to 12, **characterized in that** the flexible member (4) is woven onto the bellows member (2), wherein the diameter of the woven flexible member (4) is smaller than the outer diameter of the bellows member (2), such that the flexible member (4) is radially biased against the corrugations of the bellows member (2).

14. Method of forming a flexible member (4) around a bellows member (2) of a flexible conduit element (1) according to any of the claims 1 to 13, comprising the steps of:
positioning the bellows member (2) into a forming device, wherein the bellows member (2) is covered with a texture, which texture is biased towards the surface of the bellows member (2), in that the texture is formed around the bellows member (2) with a smaller diameter than the outer diameter of the bellows member (2),
**characterized in that**
the flexible member (4) is formed by knitting, braiding and/or weaving around the bellows member (2).

15. Method according to claim 14, **characterized in that** the bellows member (2) is simultaneously moved with the forming speed of the texture of the flexible member (4).

16. Exhaust gas system of combustion engine comprising a flexible conduit element (1) according to any of the claims 1 to 13.

## Patentansprüche

1. Flexibles Leitungselement (1), das zur Verwendung in Abgassystemen von Fahrzeugen mit Verbrennungsmotor eingerichtet ist, wobei es umfasst:
ein Balgteil (2), das aus einem elastischen Material, vorzugsweise Metall, besteht,
ein erstes Fixierelement (8), das einen Endabschnitt (24) des Balgteils (2) wenigstens teilweise umschließt,
ein zweites Fixierelement, das von dem ersten Fixierelement (8) beabstandet ist, und
ein flexibles Teil (4), das das Balgteil (2) wenigstens teilweise umschließt, wobei das flexible Teil (4) einen ersten Endabschnitt (40) sowie einen zweiten Endabschnitt (41) umfasst und der erste Endabschnitt (40) des flexiblen Teils an das erste Fixierelement (8) angrenzt und von dem ersten Fixierelement (8) getrennt ist,
**dadurch gekennzeichnet, dass**
der erste Endabschnitt (40) des flexiblen Teils (4) lose zwischen dem Balgteil (2) und dem ersten Fixierelement (8) positioniert ist, so dass der erste Endabschnitt (40) des flexiblen Teils (4) sowohl von dem Balgteil (2) als auch von dem ersten Fixierelement (8) beabstandet ist, das erste Fixierelement (8) den ersten Endabschnitt (40) des flexiblen Teils (4) umschließt und mit dem Endabschnitt (24) des Balgteils (2) eine Aufnahme-Hohlraum (50) bildet, in dem der Endabschnitt (40) des flexiblen Teils (4) positioniert ist.

2. Flexibles Leitungselement (1) nach Anspruch 1, das umfasst:
ein äußeres Ringelement (7), das wenigstens einen Endabschnitt (24) des Balgteils (2) wenigstens teilweise umschließt und das sich an dem Einlass oder dem Auslass des Balgteils (2) befindet, wobei ein Mittelabschnitt (42) oder/und ein zweiter Endabschnitt (41) des flexiblen Teils (4) an das Balgteil (2) gespannt wird/werden und sich dieser Mittelabschnitt (42) zwischen dem ersten und dem zweiten Endabschnitt (40, 41) befindet.

3. Flexibles Leitungselement (1) nach den Ansprüchen 1 bis 2, **dadurch gekennzeichnet, dass** sich das flexible Teil (4) wenigstens von einem Endabschnitt (24) des Balgteils (2) zu einem Mittelabschnitt (21) des Balgteils (21) oder zu dem gegenüberliegenden Endabschnitt (24) des Balgteils (2) erstreckt, wobei das flexible Teil(4) mittels des zweiten Fixierelementes (9) oder eines elastischen Elementes (15), beispielsweise einer Feder, teilweise an das Balgteil (2) gespannt wird.

4. Flexibles Leitungselement (1) nach einem der vorangehenden Ansprüche 1 bis 3, **dadurch gekennzeichnet, dass** der zweite Endabschnitt (40, 41) oder/und der Mittelabschnitt (42) des flexiblen Teils (4) mittels des zweiten Fixierelementes (9) oder eines elastischen Teils (15), beispielsweise einer ringförmigen Feder, an dem Balgteil (2) fixiert wird, und wenigstens ein Endabschnitt (40, 41) des flexiblen Teils (4) mittels eines Einschränkungselementes (70), beispielsweise eines Spanndrahtes, an dem Balgteil (2) fixiert wird, so dass beide oder wenigstens der Endabschnitt (41, 40) drehend um eine Mittelachse (M) des flexiblen Leitungselementes (1) herum bewegt werden können/kann.

5. Flexibles Leitungselement (1) nach einem der vorangehenden Ansprüche 1 bis 4, **dadurch gekennzeichnet, dass** wenigstens der zweite Endabschnitt (40, 41) des flexiblen Teils (4) mit einer Krawattenknoten-Naht (tie knot seam) (60) befestigt ist, die den Endabschnitt des flexiblen Teils teilweise abdeckt und an dem Endabschnitt mittels Wirken, Nähen, Nieten, Kleben und/oder Schweißen befestigt ist, und wenigstens ein Endabschnitt (49, 41) des flexiblen Teils (4) als eine einzelne Schicht auf der Oberfläche der äußeren gewellten Fläche des Balgteils (2) positioniert ist.

6. Flexibles Leitungselement (1) nach einem der vorangehenden Ansprüche 1 bis 5, **dadurch gekennzeichnet, dass** das flexible Teil (4) wenigstens einen Endabschnitt (24) des Balgteils (2) abdeckt und sich zu dem Mittelabschnitt (21) des Balgteils (2) erstreckt, wobei dieser Mittelabschnitt (21) nicht durch das flexible Teil (4) abgedeckt wird.

7. Flexibles Leitungselement (1) nach Anspruch 6, **dadurch gekennzeichnet, dass** der Mittelabschnitt (21) des Balgteils (2) durch ein zweites flexibles Teil (4) abgedeckt wird, das an dem flexiblen Teil (4) angebracht ist, das den Endabschnitt (24) des Balgteils (2) abdeckt und eine andere Steifigkeit hat als das erste flexible Teil (4), das die Endabschnitte (24) des Balgteils (2) abdeckt.

8. Flexibles Leitungselement (1) nach einem der vorangehenden Ansprüche 1 bis 7, **dadurch gekennzeichnet, dass** das flexible Teil (4) aus einer Faser besteht, die gewebt, geflochten und/oder gewirkt ist.

9. Flexibles Leitungselement (1) nach Anspruch 8, **dadurch gekennzeichnet, dass**das flexible Teil (4) wenigstens teilweise ein Geflecht, ein Gewirk oder ein Vlies umfasst und zu einem röhrenförmigen äußeren Netz geformt ist, das die äußere gewellte Röhre des Balgteils (2) umschließt.

10. Flexibles Leitungselement (1) nach einem der vorangehenden Ansprüche 4 bis 9, **dadurch gekennzeichnet, dass** das Einschränkungselement (70) in den Endabschnitt (40, 41) des flexiblen Teils (4), insbesondere in die Krawattenknoten-Naht (60) und dabei insbesondere in die durch das Gewebe bzw. das Gewirk gebildeten Schlaufen eingezogen ist.

11. Flexibles Leitungselement (1) nach einem der vorangehenden Ansprüche 1 bis 10, **dadurch gekennzeichnet, dass** das Balgteil (2) einen Leitkanal zum Leiten des Abgases eines Verbrennungsmotors bildet oder der Leitkanal durch eine innere Röhre (10) oder durch eine von einem Netz umschlossene innere Röhre (10) gebildet wird.

12. Flexibles Leitungselement (1) nach einem der vorangehenden Ansprüche 1 bis 11, **dadurch gekennzeichnet, dass** das flexible Teil (4) eine kreisförmige gewebte Röhre mit einem konstanten Durchmesser oder einem variablen Durchmesser an seinem ersten Endabschnitt (40), seinem zweiten Endabschnitt (41) oder seinem Mittelabschnitt (42) ist.

13. Flexibles Leitungselement (1) nach einem der vorangehenden Ansprüche 1 bis 12, **dadurch gekennzeichnet, dass** das flexible Teil (4) auf das Balgteil (2) gewebt ist, wobei der Durchmesser des gewebten flexiblen Teils (4) kleiner ist als der Außendurchmesser des Balgteils (2), so dass das flexible Teil (4) radial an die Wellen des Balgteils (2) gespannt wird.

14. Verfahren zum Ausbilden eines flexiblen Teils (4) um ein Balgteil (2) eines flexiblen Leitungselementes (1) nach einem der Ansprüche 1 bis 13, das die folgenden Schritte umfasst:
Positionieren des Balgteils (2) in einer Formvorrichtung, wobei das Balgteil (2) mit einer Struktur abgedeckt ist, und die Struktur dadurch, dass die Struktur mit einem kleineren Durchmesser als dem Außendurchmesser des Balgteils (2) um das Balgteil (2) herum ausgebildet ist, auf die Oberfläche des Balgteils (2) zu gespannt wird,
**dadurch gekennzeichnet, dass**
das flexible Teil (4) durch Wirken, Flechten und/oder Weben um das Balgteil (2) herum ausgebildet wird.

15. Verfahren nach Anspruch 14, **dadurch gekennzeichnet, dass** das Balgteil (2) simultan mit der Geschwindigkeit beim Formen der Struktur des flexiblen Elementes (4) bewegt wird.

16. Abgassystem eines Verbrennungsmotors, das ein flexibles Leitungselement (1) nach einem der Ansprüche 1 bis 13 umfasst.

## Revendications

1. Élément de conduite flexible (1) configuré pour être utilisé dans des systèmes de gaz d'échappement de véhicules à moteur à combustion, comprenant :
un élément à soufflet (2) qui est constitué d'un matériau élastique, de préférence de métal,
un premier élément de fixation (8) qui entoure au moins partiellement une partie d'extrémité (24) de l'élément à soufflet (2),
un second élément de fixation qui est espacé du premier élément de fixation (8), et
un élément flexible (4), qui entoure au moins partiellement l'élément à soufflet (2), ledit élément flexible (4) comprenant une première partie d'extrémité (40) et une seconde partie d'extrémité (41), dans lequel la première partie d'extrémité (40) de l'élément flexible est voisine du premier élément de fixation (8) et est séparée du premier élément de fixation (8),
**caractérisé en ce que**
la première partie d'extrémité (40) de l'élément flexible (4) est positionnée de manière lâche entre l'élément à soufflet (2) et le premier élément de fixation (8) de sorte que la première partie d'extrémité (40) de l'élément flexible (4) est espacée à la fois de l'élément à soufflet (2) et du premier élément de fixation (8), le premier élément de fixation (8) entourant la première partie d'extrémité (40) de l'élément flexible (4) et, avec la partie d'extrémité (24) de l'élément à soufflet (2), définissant une poche de réception (50) dans laquelle est positionnée la partie d'extrémité (40) de l'élément flexible (4).

2. Élément de conduite flexible (1) selon la revendication 1, comprenant :
un élément d'anneau extérieur (7) qui entoure au moins partiellement au moins une partie d'extrémité (24) de l'élément à soufflet (2) et qui est situé à l'entrée ou à la sortie de l'élément à soufflet (2), dans lequel au moins l'une parmi une partie médiane (42) et/ou la seconde partie d'extrémité (41) de l'élément flexible (4), laquelle partie médiane (42) est située entre les première et seconde parties d'extrémité (40, 41), est sollicitée contre l'élément à soufflet (2).

3. Élément de conduite flexible (1) selon les revendications 1 à 2, **caractérisé en ce que** l'élément flexible (4) s'étend au moins d'une partie d'extrémité (24) de l'élément à soufflet (2) jusqu'à une partie médiane (21) de l'élément à soufflet (2), ou jusqu'à la partie d'extrémité opposée (24) de l'élément à soufflet (2), l'élément flexible (4) étant partiellement sollicité contre l'élément à soufflet (2) au moyen du second élément de fixation (9) ou d'un élément élastique (15), comme un ressort.

4. Élément de conduite flexible (1) selon l'une quelconque des revendications précédentes 1 à 3, **caractérisé en ce qu'**au moins l'une parmi la seconde partie d'extrémité (40, 41) ou la partie médiane (42) de l'élément flexible (4) est fixée contre l'élément à soufflet (2) au moyen du second élément de fixation (9) ou d'un élément élastique (15), par exemple un ressort annulaire, et au moins une partie d'extrémité (40, 41) de l'élément flexible (4) est fixée contre l'élément à soufflet (2) au moyen d'un élément de restriction (70), comme un fil de tension, de sorte que les deux parties ou la au moins une partie d'extrémité (41, 40) est mobile en torsion autour d'un axe médian (M) de l'élément de conduite flexible (1).

5. Élément de conduite flexible (1) selon l'une quelconque des revendications précédentes 1 à 4, **caractérisé en ce qu'**au moins l'une parmi la seconde partie d'extrémité (40, 41) de l'élément flexible (4) est fixée avec une couture en noeud de cravate (60), qui recouvre partiellement la partie d'extrémité de l'élément flexible et est fixée à la partie d'extrémité par tricotage, couture, rivetage, collage et/ou soudage, et au moins une partie d'extrémité (49, 41) de l'élément flexible (4) est disposée sous forme d'une couche unique sur la surface de la surface ondulée extérieure de l'élément à soufflet (2).

6. Élément de conduite flexible (1) selon l'une quelconque des revendications précédentes 1 à 5, **caractérisé en ce que** l'élément flexible (4) recouvre au moins une partie d'extrémité (24) de l'élément à soufflet (2) et s'étend jusqu'à la partie médiane (21) de l'élément à soufflet (2), laquelle partie médiane (21) n'est pas recouverte par l'élément flexible (4).

7. Élément de conduite flexible (1) selon la revendication 6, **caractérisé en ce que** la partie médiane (21) de l'élément à soufflet (2) est recouverte par un second élément flexible (4), qui est fixé à l'élément flexible (4) qui recouvre la partie d'extrémité (24) de l'élément à soufflet (2) et qui présente une rigidité différente de celle du premier élément flexible (4) recouvrant les parties d'extrémité (24) de l'élément à soufflet (2).

8. Élément de conduite flexible (1) selon l'une quelconque des revendications précédentes 1 à 7, **caractérisé en ce que** l'élément flexible (4) est constitué d'une fibre qui est tissée, tressée, et/ou tricotée.

9. Élément de conduite flexible (1) selon la revendication 8, **caractérisé en ce que** l'élément flexible (4) comprend au moins partiellement un tissu tressé, un tissu tricoté ou un tissu non-tissé, et est formé en un filet extérieur tubulaire pour entourer le tube ondulé extérieur de l'élément à soufflet (2).

10. Élément de conduite flexible (1) selon l'une quelconque des revendications précédentes 4 à 9, **caractérisé en ce que** l'élément de restriction (70) est vissé dans la partie d'extrémité (40, 41) de l'élément flexible (4), en particulier dans la couture en noeud de cravate (60), en particulier dans les boucles formées par le tissu tissé et le tissu tricoté, respectivement.

11. Élément de conduite flexible (1) selon l'une quelconque des revendications précédentes 1 à 10, **caractérisé en ce que** l'élément à soufflet (2) définit un canal de guidage pour guider les gaz d'échappement d'un moteur à combustion, ou le canal de guidage est défini par un tube intérieur (10) ou par un tube intérieur (10) entouré d'un treillis.

12. Élément de conduite flexible (1) selon l'une quelconque des revendications précédentes 1 à 11, **caractérisé en ce que** l'élément flexible (4) est un tube tissé circulaire ayant un diamètre constant ou un diamètre variable au niveau de sa première partie d'extrémité (40), seconde partie d'extrémité (41), ou sa partie médiane (42).

13. Élément de conduite flexible (1) selon l'une quelconque des revendications précédentes 1 à 12, **caractérisé en ce que** l'élément flexible (4) est tissé sur l'élément à soufflet (2), le diamètre de l'élément flexible tissé (4) étant inférieur au diamètre extérieur de l'élément à soufflet (2), de sorte que l'élément flexible (4) est sollicité radialement contre les ondulations de l'élément à soufflet (2).

14. Procédé de formation d'un élément flexible (4) autour d'un élément à soufflet (2) d'un élément de conduite flexible (1) selon l'une quelconque des revendications 1 à 13, comprenant les étapes consistant à :
positionner l'élément à soufflet (2) dans un dispositif de formation, dans lequel l'élément à soufflet (2) est recouvert d'une texture, laquelle texture est sollicitée vers la surface de l'élément à soufflet (2), de sorte que la texture est formée autour de l'élément à soufflet (2) avec un diamètre inférieur au diamètre extérieur de l'élément à soufflet (2),
**caractérisé en ce que**
l'élément flexible (4) est formé par tricotage, tressage et/ou tissage autour de l'élément à soufflet (2).

15. Procédé selon la revendication 14, **caractérisé en ce que** l'élément à soufflet (2) est déplacé simultanément avec la vitesse de formation de la texture de l'élément flexible (4).

16. Système de gaz d'échappement de moteur à combustion comprenant un élément de conduite flexible (1) selon l'une quelconque des revendications 1 à 13.
